# EUROPEAN PATENT APPLICATION

(11) **EP 2 902 655 A2**
(43) Date of publication of application: **05.08.2015**
(21) Application number: 14194240.9
(22) Date of filing: 21.11.2014
(51) Int. Cl.: F16D 67/00, F16D 51/18, H02K 7/06, H02K 7/102

(54) **Resistance generation apparatus**

(30) Priority: 29.11.2013 JP 2013247153
(71) Applicant: AISIN SEIKI KABUSHIKI KAISHA, Kariya-shi, Aichi 448-8650 (JP)
(72) Inventor: Hidaka, Dai, Kariya-shi,, Aichi 448-8650 (JP); Sakai, Toshiyuki, Kariya-shi,, Aichi 448-8650 (JP); Imatomi, Yasuo, Kariya-shi,, Aichi 448-8650 (JP)
(74) Representative: TBK

(57) **Abstract**

A resistance generation apparatus (1, 11) includes a power receiving portion (4), a transmission portion (2, 3, 5, 7, 12, 42) transmitting rotational motion of the power receiving portion to a rotational body (113), a fixing member (9, 107), the transmission portion including a pivot member (2, 12) being pivotable between a contact position (P1) at which the pivot member is in contact with the fixing member and a non-contact position (P2) at which the pivot member is separated from the fixing member, the transmission portion including a holding portion, the holding portion holding the pivot member at the contact position to generate resistance relative to rotational motion of the rotational body, the holding portion holding the pivot member at the non-contact position to release the resistance in a case where the power receiving portion is rotated by the power.

## Description

### TECHNICAL FIELD

This disclosure generally relates to a resistance generation apparatus.

### BACKGROUND DISCUSSION

Conventionally, a vehicle is provided with a drive apparatus which opens and closes an opening/closing member such as a backdoor, a swing door, a slide door, a window or the like. For example, the drive apparatus which opens and closes the backdoor (a rear door) includes a coupling which is provided at one end portion of the drive apparatus and is connected to a vehicle body, and a coupling which is provided at the other end portion of the drive apparatus and is connected to the opening/closing member. The drive apparatus includes a threaded spindle which is rotated by motor power and/or human power (power) of a user, a spindle nut threadedly engaged with the threaded spindle, and a spindle tube of which one end portion is fixed to the spindle nut and of which the other end portion is fixed to the coupling that is connected to the opening/closing member.

In a case the threaded spindle is rotated by the power, the rotational motion of the threaded spindle is converted, by the threaded spindle and the spindle nut, into linear motion of the spindle nut. Accordingly, the spindle tube fixed to the spindle nut moves linearly, and thus the opening/closing member opens and closes. In addition, the drive apparatus is configured in such a manner that the user may place his or her hand on the opening/closing member to manually open and close the opening/closing member.

The drive apparatus includes a compression coil spring for holding the opening/closing member in an open state. The compression coil spring generates a reaction force that counterbalances with or is equivalent to a self-weight of the opening/closing member, and thus maintains the open state of the opening/closing member.

In addition, the drive apparatus includes a resistance generation apparatus which generates resistance to the rotational motion of the threaded spindle so that the opening/closing member is held in the open state even in a case where an external force such as wind and/or snow is applied to the opening/closing member (DE utility model application publication number DE202007015597U, which will be hereinafter referred to as Patent reference 1). Disclosed in Patent reference 1 is a resistance generation apparatus of a drive apparatus including a threaded spindle and a spindle nut. The resistance generation apparatus includes a power receiving portion which receives power from a motor and is rotatable, an output member which transmits a rotational motion of the power receiving portion to the threaded spindle, and a hollow cylindrical transmission element surrounding the power receiving portion, a fixing member surrounding the hollow cylindrical transmission element, a first torsion coil spring frictionally engages with an inner circumferential surface of the fixing member and a second torsion coil spring frictionally engages with an inner circumferential surface of the hollow cylindrical transmission element. The rotational motion of the power receiving portion is transmitted to the output member.

In a case where the power receiving portion is rotated by the motor, the power receiving portion biases the second torsion coil spring and thereby reduces an outer diameter of the second torsion coil spring, Accordingly, the frictional engagement between the second torsion coil spring and the hollow cylindrical transmission element is weakened or reduced. As a result, the power receiving portion rotates the output member with a small resistance, thereby opening and closing an opening/closing member. In a case where the operation of the motor is stopped, the opening/closing member is held in an open state due to the frictional engagement between the fixing member and the first torsion coil spring, and due to the frictional engagement between the hollow cylindrical transmission element and the second torsion coil spring.

On the other hand, in a case where the user applies the force manually to the opening/closing member, the output member biases the second torsion coil spring so that the frictional engagement between the second torsion coil spring and the hollow cylindrical transmission element is enhanced, and thereby rotating the hollow cylindrical transmission element. The rotation of the hollow cylindrical transmission element biases the first torsion coil spring and thereby reduces an outer diameter of the first torsion coil spring. Accordingly, the frictional engagement between the first torsion coil and the fixing member is weakened. As a result, the power output member rotates with a small resistance, and the user may open and close the opening/closing member manually.

According to Patent reference 1, however, in a case where the power receiving portion is rotated by the motor to open and close the opening/closing member, the frictional engagement between the second torsion coil spring and the hollow cylindrical transmission element is not released completely. Consequently, the resistance to the rotational motion of the power receiving portion is not reduced to zero.

In addition, because the frictional resistance is generated by the increase and decrease of the outer diameters of the torsion coil springs, the resistance force is not stable. Thus, the opening/closing member in the open state may unintentionally close in a case where only a slight external force is applied to the opening/closing member. Further, in a case where the frictional resistance force is adjusted by the increase and decrease of the outer diameters of the torsion coil springs, it is difficult to set the frictional resistance force.

A need thus exists for a resistance generation apparatus which, in a case where rotational motion of a power receiving portion is transmitted to a rotational body, reliably releases resistance to rotational motion of the rotational body.

### SUMMARY

According to an aspect of this disclosure, a resistance generation apparatus includes a power receiving portion being rotatable and receiving power, a transmission portion being rotatable and transmitting rotational motion of the power receiving portion rotated by the power to a rotational body, a fixing member arranged around the transmission portion, the transmission portion including a pivot member being pivotable between a contact position at which the pivot member is in contact with the fixing member and a non-contact position at which the pivot member is separated from the fixing member, the transmission portion including a holding portion, the holding portion holding the pivot member at the contact position to generate resistance relative to rotational motion of the rotational body, the holding portion holding the pivot member at the non-contact position to release the resistance in a case where the power receiving portion is rotated by the power, and the resistance generation apparatus being used for a vehicle.

According to the above-described configuration, in a case where the rotational motion of the power receiving portion is transmitted to the rotational body, the resistance to the rotational motion of the rotational body is reliably released.

According to an aspect of this disclosure, the holding portion includes a biasing member biasing the pivot member in a direction in which the pivot member is away from a rotational center of the transmission portion to hold the pivot member at the contact position.

According to an aspect of this disclosure, the pivot member includes a pair of members, and the biasing member is provided between the pair of members.

According to an aspect of this disclosure, the holding portion includes a moving member moving the pivot member towards the rotational center of the transmission portion to hold the pivot member at the non-contact position in a case where the power receiving portion is rotated by the power.

According to an aspect of this disclosure, the moving member corresponds to a protruding portion protruding from the power receiving portion along a rotational axis of the power receiving portion, and the pivot member is provided with a hole and the protruding portion is arranged in the hole by insertion.

According to an aspect of this disclosure, the resistance generation apparatus includes a restriction portion restricting the pivot member from moving towards the rotational center, the restriction portion being provided at the power receiving portion.

According to an aspect of this disclosure, the resistance generation apparatus includes a decelerator arranged between the transmission portion and the rotational body, and decelerating a rotational speed of rotations of the transmission portion.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a view illustrating a drive apparatus according to a first embodiment disclosed here, in a state where the drive apparatus is mounted on a backdoor of a vehicle;
Fig. 2 is a perspective view of the drive apparatus;
Fig. 3A is a cross-sectional view of the drive apparatus in a state where the backdoor is fully closed;
Fig. 3B is a cross-sectional view of the drive apparatus in a state where the backdoor is fully opened;
Fig. 4 is a perspective view of a resistance generation apparatus connected to a decelerator according to the first embodiment;
Fig. 5 is a plan view of the resistance generation apparatus;
Fig. 6 is an exploded perspective view of the resistance generation apparatus;
Fig. 7A is a cross-sectional view taken along line VII-VII in Fig. 5 in a state where the resistance generation apparatus generates resistance to rotational motion;
Fig. 7B is a cross-sectional view taken along line VII-VII in Fig. 5 in a state where the resistance is released;
Fig. 8A is a cross-sectional view of a resistance generation apparatus according to a second embodiment disclosed here in a state where the resistance generation apparatus generates the resistance to the rotational motion; and
Fig. 8B is a cross-sectional view of the resistance generation apparatus according to the second embodiment in a state where the resistance is released.

### DETAILED DESCRIPTION

A first embodiment disclosed here will be described with reference to the drawings. For example, dimensions, material, shapes and configurations, and relative positions of components described in the embodiment are not provided to intend to limit the scope of the disclosure unless otherwise particularly specified.

A drive apparatus will be described below. The drive apparatus is used for opening and closing an opening/closing member including a swing door, a slide door and a window of a vehicle. In the first embodiment, an explanation is made on a spindle-type door holding apparatus for a power backdoor as an example of the drive apparatus. The use of the drive apparatus, however, is not limited to the opening and closing of the door, and the drive apparatus may be used for raising and lowering a seat of the vehicle.

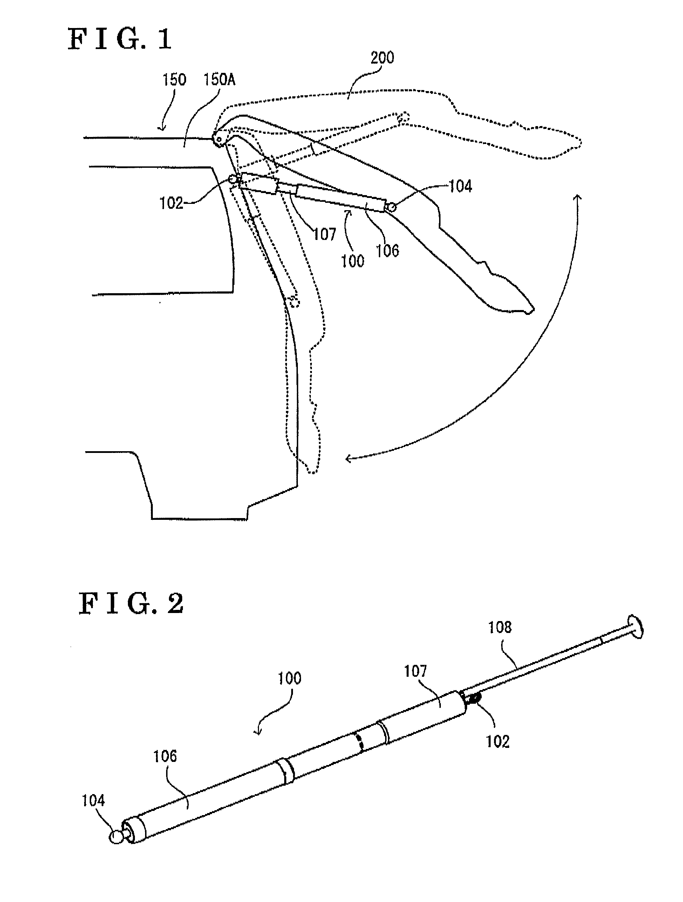

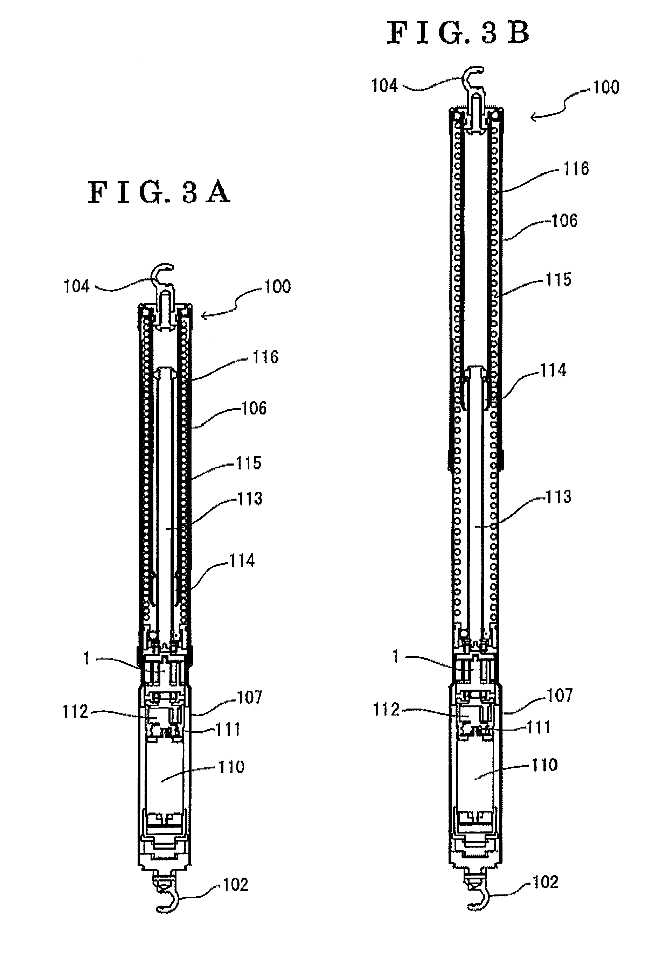

Fig. 1 is a view illustrating a drive apparatus 100 provided at a backdoor (i.e., an opening/closing member) 200 of a vehicle 150. The drive apparatus 100 is a so-called spindle power backdoor drive unit. The drive apparatus 100 is provided at each side of a vehicle body 150A of the vehicle 150 in a width direction thereof to be positioned between the vehicle body 150A and the backdoor 200. Joints 102 and 104 are provided at respective end portions of the drive apparatus 100. The joint 102 provided at one end portion of the drive apparatus 100 is connected to the vehicle body 150A. The joint 104 provided at the other end portion of the drive apparatus 100 is connected to the backdoor 200. A cover tube 106 formed in a cylindrical shape is moved relative to a housing tube 107 formed in a cylindrical shape by a motor 110 (refer to Fig. 3) which is built in or housed within the drive apparatus 100, and thus the backdoor 200 opens and closes.

As illustrated in Fig. 2, the drive apparatus 100 includes the housing tube 107 and the cover tube 106 fitted to the housing tube 107 in a telescopic manner. The cover tube 106 is movable back and forth (reciprocating motion) in an axial direction of the drive apparatus 100 relative to the housing tube 107. The cover tube 106 and the housing tube 107 form a retractable tube, that is, a tube which can extend and can be retracted. The joint 102 is provided at an end portion of the housing tube 107. The joint 104 is provided at an end portion of the cover tube 106. An electric cable 108 supplies electric power to the motor 110 (refer to Fig. 3) housed in the housing tube 107.

As illustrated in Figs. 3A and 3B, the motor 110 serving as a drive source of the drive apparatus 100 is housed in the housing tube 107. A rotary shaft 111 of the motor 110 is connected to a decelerator (planetary gear) 112. The decelerator 112 is connected to a resistance generation apparatus 1 and transmits power, that is, motive power, of the motor 110 to the resistance generation apparatus 1. The resistance generation apparatus 1 is connected to a threaded spindle (i.e., a rotational body) 113 and transmits rotational motion of the motor 110 to the threaded spindle 113.

A spindle nut 114 is threadedly engages with the threaded spindle 113. The threaded spindle 113 is rotatably held by the housing tube 107. The threaded spindle 113 is arranged by insertion in a spindle tube 115 formed in a cylindrical shape. One end portion of the spindle tube 115 is fixed to the spindle nut 114 and the other end portion of the spindle tube 115 is fixed to the joint 104 and to the cover tube 106.

A helical compression spring 116 is accommodated inside the cover tube 106. In a case where the backdoor 200 is open, the helical compression spring 116 generates a biasing force which is equivalent to (that is, counterbalances with) or larger than a self-weight of the backdoor 200 so that the backdoor 200 is held in an open state.

In a case where the motor 110 rotates, the threaded spindle 113 is rotated via the decelerator 112 and the resistance generation apparatus 1. The rotational motion of the threaded spindle 113 is converted into a linear motion of the spindle nut 114 and the spindle tube 115 by means of the threadable engagement between the threaded spindle 113 and the spindle nut 114. The cover tube 106 is moved or displaced, relative to the housing tube 107, by the linear motion of the spindle nut 114 and the spindle tube 115, and thereby opening and closing the backdoor 200.

In a state where the backdoor 200 is fully closed, the spindle nut 114 is positioned at a lower portion of the threaded spindle 113, and a most part of the cover tube 106 covers the housing tube 107 as illustrated in Fig. 3A. That is, the retractable tube is in a retracted or shortened state. In a case where the motor 110 rotates to open the backdoor 200, the spindle nut 114 is moved upwardly by the rotations of the threaded spindle 113. In a state where the backdoor 200 is fully open, the spindle nut 114 is positioned at an upper portion of the threaded spindle 113, and the cover tube 106 moves upwardly relative to the housing tube 107 as illustrated in Fig. 3B. That is, the retractable tube is in an extended or elongated state.

The cover tube 106 is configured to stop and stay at a desired or arbitrary position relative to the housing tube 107. In a state where the cover tube 106 is stopped at the desired position, the self-weight of the backdoor 200 is applied to the cover tube 106, however, the self-weight of the backdoor 200 counterbalances with the biasing force of the helical compression spring 116. Thus, the backdoor 200 stops at the desired position. In a case where an undesired external force such as wind is applied to the backdoor 200, the resistance generation apparatus 1 generates resistance to an opening/closing operation of the backdoor 200, and thereby maintaining the position of the backdoor 200.

The resistance generation apparatus will be described below. The drive apparatus 100 is provided with the helical compression spring 116 so that the backdoor 200 is prevented from closing due to the self-weight thereof in a state where the backdoor 200 is open. However, in a case where a load such as wind and/or snow is applied to the backdoor 200 in a state where the backdoor 200 is open, the backdoor 200 may close undesirably. Therefore, the drive apparatus 1 includes the resistance generation apparatus 1 so that the backdoor 200 does not close even in a case where a certain degree of external force is applied to the backdoor 200 in the open state.

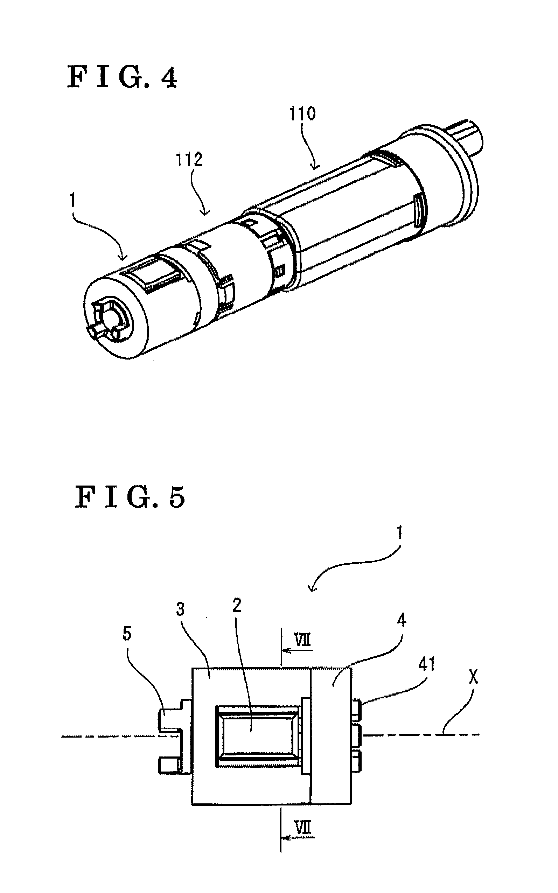

As illustrated in Fig. 4, the resistance generation apparatus 1 is connected to the decelerator 112, The resistance generation apparatus 1 is accommodated within the housing tube 107. The decelerator 112 is connected to the motor 110. The resistance generation apparatus 1 is rotated by the power from the motor 110 via the decelerator 112. Because the motor 110 rotates at a high speed, the rotational speed of rotations of the motor 110 is reduced or decelerated by the decelerator 112. The resistance generation apparatus 1 rotates at the rotational speed that is decelerated by the decelerator 112.

As illustrated in Fig. 5, the resistance generation apparatus 1 includes a lever (i.e., a pivot member) 2, a case (i.e., a support member) 3 accommodating therein the lever 2, a coupling (i.e., a first connection portion) 4 that is connected to the decelerator 112 and a coupling (i.e., a second connection portion) 5 connected to the threaded spindle 113. The coupling 4 includes a three-pronged member 41 connected the decelerator 112. The coupling 4 functions as a power receiving portion that receives the power from the motor 110 via the decelerator 112. The coupling 5 is formed to be integral with the case 3. Because the coupling 4 is connected to the decelerator 112 and the coupling 5 is connected to the threaded spindle 113, the case 3 is supported to be rotatable about a rotational axis X.

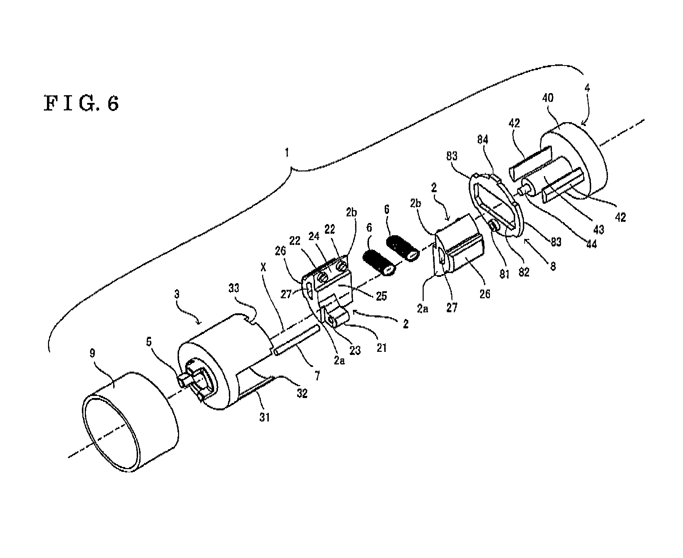

As illustrated in Fig. 6, the resistance generation apparatus 1 further includes a compression coil spring (i.e., a resilient member) 6, a pivot shaft 7 and a support plate 8. In the present embodiment, the resistance generation apparatus 1 includes, for example, two of the compression coil springs 6. The resistance generation apparatus 1 may or may not include an outer cylinder (i.e., a fixing member) 9. Instead of the outer cylinder 9, the housing tube 107 may be used as the fixing member.

The lever 2 is provided as a pair (i.e., a pair of members) and each of the levers 2 includes a similar configuration. The lever 2 includes a base end portion 2a, an arm portion 21 provided at the base end portion 2a, an end portion 2b, and two spring-receiving portions 22 provided at the end portion 2b. The arm portion 21 is formed with a bore 23 in which the pivot shaft 7 is placed by insertion. The two spring-receiving portions 22 are provided at an opposing surface 24 of the lever 2. The opposing surfaces 24 of the respective levers 2 oppose or face each other. The opposing surface 24 includes a restriction surface 25 that restricts the pivoting movement of the lever 2. The lever 2 includes a contact portion 26 at a side opposite to the opposing surface 24, that is, at an outer side. The contact portion 26 is configured to be in contact with an inner surface of the outer cylinder 9 serving as the fixing member or an inner surface of the housing tube 107 serving as the fixing member. A hole 27, which is formed along the rotational axis X, is provided at a substantially central portion of the lever 2. The hole 27 receives therein a protruding portion 42 provided at the coupling 4. In the present embodiment, the hole 27 corresponds to a through hole penetrating the lever 2 in a direction of the rotational axis X, however, the hole 27 does not need to be the through hole. For example, the hole 27 may be a groove and/or a contact surface which engages with the protruding portion 42.

The case 3 supports the pivot shaft 7. The pivot shaft 7 is inserted into the bore 23 provided at the arm portion 21 of the lever 2 and supports the lever 2 in a manner that the lever 2 is pivotable. The pair of levers 2 is accommodated within the case 3. The case 3 includes a pair of cut-out portions 31. The contact portions 26 of the levers 2 are configured to protrude outside the case 3 via the cut-out portions 31. The case 3 includes an attachment portion 32 to which the support plate 8 is attached and a positioning groove 33 for positioning of the support plate 8.

The compression coil springs 6 are attached to the respective spring-receiving portions 22 of each of the levers 2. Each of the compression coil springs 6 is arranged between the end portions 2b of the pair of levers 2, and biases the levers 2 in a manner that the end portions 2b are open, that is, in a manner that the end portions 2b are away from each other. That is, each of the compression coil springs 6 serves as a biasing member biasing the levers 2 in a direction in which the levers 2 are away from the rotational axis X.

The support plate 8 includes a bearing hole 81 supporting therein the pivot shaft 7, an opening portion 82 through which protruding portion 42 of the coupling 4 passes, an attachment portion 83 (for example, two of the attachment portions 83 in the present embodiment) attached to the case 3, and a positioning portion 84. After the pivot shaft 7, the levers 2 and the compression coil springs 6 are accommodated in the case 3, the support plate 8 is attached to the case 3. The pivot shaft 7 is reliably supported by the case 3 and the support plate 8. The pivot shaft 7 is provided at a position that is different from a rotational center of the case 3 (that is, different from the rotational axis X). The pivot shaft 7 may be ideally arranged at a position that is away from the rotational axis X. The pivot shaft 7 may be ideally positioned away from the rotational center as far as possible in a radial direction so that an amount of movement of the end portion 2b of the lever 2 relative to a pivot angle of the lever 2 is large. In the present embodiment, the pivot shaft 7 is provided at a position that is away from the rotational center by a half of a radius of an inner surface 9a of the outer cylinder 9 or farther.

The coupling 4 includes a main body 40 formed in a disc shape, the three-pronged member 41 provided at one surface of the main body 40, the protruding portion 42 (for example, the protruding portions 42 are provided as a pair) provided at the other surface of the main body 40, and a restriction portion 43 formed in a cylindrical shape and provided at a center of the other surface of the main body 40. The protruding portions 42 and the restriction portion 43 are formed to extend along the rotational axis X. A rotary shaft 44 is provided at an end portion of the restriction portion 43 to be extended along the rotational axis X.

The protruding portions 42 and the restriction portion 43 of the coupling 4 are inserted into the case 3 via the opening portion 82 of the support plate 8. The protruding portions 42 are inserted into the holes 27 of the levers 2, respectively. The restriction portion 43 is arranged between the pair of levers 2. The rotational shaft 44 of the coupling 4 is inserted into a hole provided inside the case 3, and accordingly the coupling 4 is rotatable relative to the case 3. The restriction portion 43 of the coupling 4 also functions as a support shaft supporting the case 3.

The case 3 is placed in the outer cylinder 9 by insertion. The outer cylinder 9 is fixed within the housing tube 107. Alternatively, the outer cylinder 9 may be omitted, and the case 3 may be placed within the housing tube 107.

The protruding portions 42 of the coupling 4, the levers 2, the pivot shaft 7, the case 3, and the coupling 5 constitute a transmission portion which is rotatable and transmits the rotational motion of the coupling 4 to the threaded spindle (i.e., the rotational body) 113,

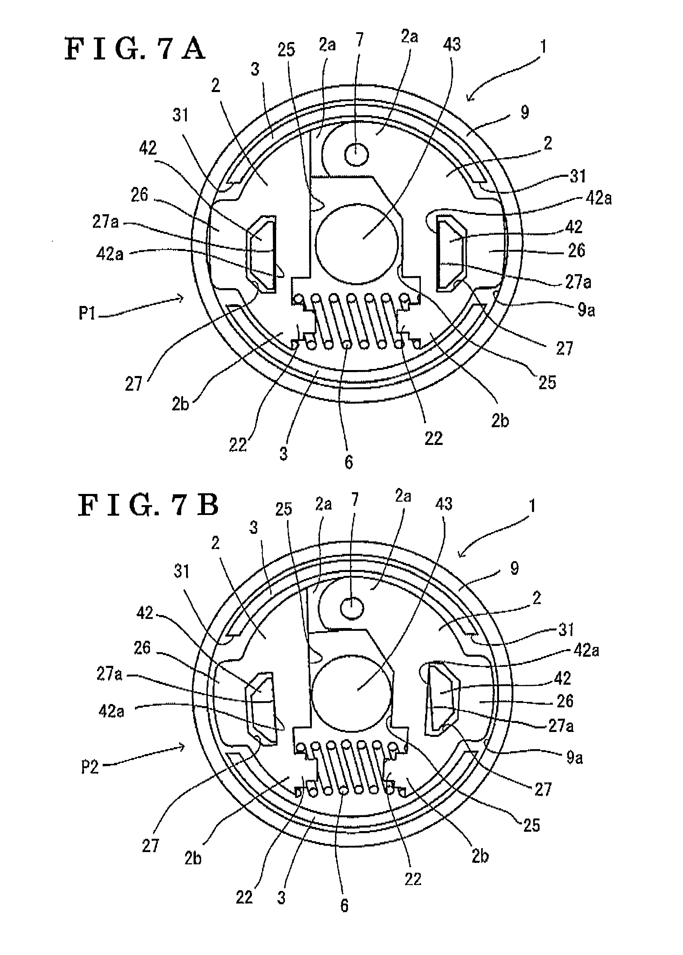

As illustrated in Fig. 7A and 7B, the base end portion 2a of each of the levers 2 is rotatably or pivotally supported by the pivot shaft 7 and the end portion 2b of each of the levers 2 pivots. As illustrated in Fig. 7A, the compression coil spring 6 is arranged between the end portions 2b of the pair of levers 2, and biases the end portions 2b of the levers 2 in a manner that the end portions 2b are open, that is, in a manner that the end portions 2b are moved to be away from each other. Consequently, the levers 2 are biased in the direction in which the levers 2 are away from the rotational axis X, and thus the contact portions 26 of the respective levers 2 are brought in contact with the inner surface 9a of the outer cylinder 9. The levers 2 (the pivot members) are held at a contact position P1, at which the levers 2 are in contact with the outer cylinder (the fixing member) 9, by the compression coil springs (i.e., holding portions) 6. As the contacting portions 26 of the respective levers 2 are in contact with the inner surface 9a of the outer cylinder 9, the resistance generation apparatus 1 generates the resistance against the rotational motion of the threaded spindle (the rotational body) 113.

Because a contact pressure at which the contact portions 26 of the respective levers 2 are in contact with the inner surface 9a of the outer cylinder 9 is proportional to displacement or change of a length of each of the compression coil springs 6 in an axial direction of the compression coil spring 6, the contact pressure may be set easily. In addition, because each of the compression coil springs 6 is arranged in a manner that the axial direction of the compression coil spring 6 is parallel to a direction that is orthogonal to the direction of the rotational axis X, a length of the resistance generation apparatus 1 in the direction of the rotational axis X may be short.

On the other hand, in a case where the coupling 4 rotates relative to the case 3, a contact surface 42a of each of the protruding portions 42 is brought in contact with a contact surface 27a of the hole 27 of the corresponding lever 2. Accordingly, the protruding portions (i.e., moving members) 42 move the levers 2 towards the rotational center. The levers 2 are held at a non-contact position P2, at which the levers 2 are away from the outer cylinder (the fixing member) 9, by the protruding portions (the moving members) 42.

To prevent the compression coil springs 6 from being damaged due to an excessive movement of the levers 2 towards the rotational center, the restriction surfaces 25 of the respective levers 2 are brought in contact with the restriction portion 43 of the coupling 4. Accordingly, the levers 2 are restricted from moving towards the rotational center by a predetermined amount or more.

An operation of the resistance generation apparatus 1 will be described below. In a state where the motor 110 is stopped and the backdoor 200 is stopped at the desired position, the resistance generation apparatus 1 is in a state illustrated in Fig. 7A. In addition, also in a case where a user places his or her hand on the backdoor 200 to open/close the backdoor 200, the resistance generation apparatus 1 is in the state illustrated in Fig. 7A. At this time, the protruding portions 42 of the coupling 4 do not bias the levers 2. The levers 2 are biased by spring force (biasing force) of the compression coil springs 6 in the direction in which the levers 2 are away from the rotational center, and thus are moved or shifted outwardly. The contact portions 26 of the levers 2 are moved outwardly by the spring force of the compression coil springs 6 and are in pressure contact with the inner surface 9a of the outer cylinder 9 via the respective cut-out portions 31 of the case 3. The pressure contact of the contact portions 26 of the levers 2 relative to the inner surface 9a of the outer cylinder 9, that is, a frictional resistance, generates the resistance to the rotational motion of the threaded spindle 113. The compression coil springs 6 hold the levers 2 in the contact position P1 so as to generate the resistance to the rotational motion of the threaded spindle 113.

That is, in a case where external loading, such as wind or snow, is applied to the backdoor 200 that is in the open state and thus the backdoor 200 tends to open/close, the threaded spindle 113 tends to rotate. However, the resistance against the rotational motion of the threaded spindle 113 is generated by the pressure contact (the frictional resistance) of the levers 2 relative to the outer cylinder 9. Accordingly, the resistance generation apparatus 1 holds the backdoor 200 in the open state at the desired position. On the other hand, the resistance of the resistance generation apparatus 1 is set so as to allow the user to open and close the backdoor 200 with his/her hand even in a state where the resistance generation apparatus 1 generates the resistance. A magnitude of the resistance of the resistance generation apparatus 1 can be set easily by changing spring constants of the compression coil springs 6. In setting the resistance, the magnitude of the resistance can be estimated easily because the resistance is proportional to the displacement or the change of the lengths of the compression coil springs 6.

The compression coil springs 6 generate the resistance against the rotational motion of the threaded spindle 113 by means of the resistance generation apparatus 1, in both cases of a normal rotation and a reverse rotation of the threaded spindle 113 due to the opening/closing of the back door 200.

In a case where the motor 110 rotates, the power of the motor 110 is transmitted via the decelerator 112 to the coupling 4. On receiving the power of the motor 110, the coupling 4 rotates the levers 2 about the rotational axis X by means of the engagement of the protruding portions 42 and the holes 27 of the corresponding levers 2 with each other. The rotation of the levers 2 about the rotational axis X rotates the case 3 via the pivot shaft 7. Then, the case 3 rotates the threaded spindle 113 via the coupling 5. Consequently, the power of the motor 110 drives or actuates the drive apparatus 100 to open and close the backdoor 200.

In a case where the coupling 4 is rotated by the power of the motor 110, the coupling 4 rotates relative to the case 3 as illustrated in Fig. 7B. Due to the rotation of the coupling 4 relative to the case 3, the contact surfaces 42a of the protruding portions 42 of the coupling 4 are brought in contact with the contact surfaces 27a of the holes 27 of the levers 2, thereby to move the levers 2 towards the rotational center. At this time, an outward portion of each of the protruding portions 42 in a radial direction of the case 3 is not in contact with an inner circumferential surface of the corresponding hole 27, and thus a clearance is provided between the radially outward portion of each the protruding portions 42 and the inner circumferential surface of the corresponding hole 27. That is, only the contact surfaces 42a of the protruding portions 42 and the contact surfaces 27a of the holes 27 are in contact with each other. Accordingly, a force working inwardly, that is, the force towards the rotational center, is ensured. That is, the end portions 2b of the levers 2 are moved in a direction in which the end portions 2b are closed to each other, that is, the end portions 2b are moved towards each other against the spring force of the compression coil springs 6. As the levers 2 move towards the rotational center, the contact portions 26 of the levers 2 become away from the inner surface 9a of the outer cylinder 9. Because the contact portions 26 of the respective levers 2 are away from the inner surface 9a of the outer cylinder 9, the resistance to the rotational motion of the threaded spindle 113 is released or removed. The protruding portions 42 function as the holding portions which hold the levers 2 at the non-contact position P2 to release the resistance against the rotational motion of the threaded spindle 113 when the coupling 4 is rotated by the power.

The power applied to the coupling 4 applies a reaction force to the protruding portions 42, and the reaction force is larger than the spring forces of the compression coil springs 6. The protruding portions 42 release the resistance of the resistance generation apparatus 1 when the coupling 4 is rotated by the motor 110 to open/close the backdoor 200, in both cases of a normal rotation and a reverse rotation of the motor 110.

The restriction surfaces 25 of the levers 2 are brought in contact with the restriction portion 43 of the coupling 4, thereby to restrict the levers 2 from moving towards the rotational center by the predetermined amount or more. Accordingly, the damage of the compression coil springs 6 is avoided. In the present embodiment, the threaded spindle 113 for opening/closing the backdoor 200 is rotated by the motor 110. However, the resistance generation apparatus 1 disclosed here may be applied to a drive apparatus which is manually operated to open and close the opening/closing member, or to raise and lower a seat.

In the present embodiment, the resistance generation apparatus 1 is arranged between the decelerator 112 and the threaded spindle 113 serving as the rotational body. However, the resistance generation apparatus 1 may be arranged between the motor 110 and the decelerator 112. The outer cylinder 9 is used in the present embodiment, however, the contact portions 26 of the levers 2 may be in contact with an inner surface of the housing tube (the fixing member) 107 without using the outer cylinder 9.

According to the present embodiment, the resistance of the resistance generation apparatus 1 is reliably released or removed in a case where the coupling 4 is rotated by the motor 110 or rotated manually. According to the present embodiment, the frictional resistance is generated by the spring force of the compression coil springs 6, the spring force is in a length direction of the compression coil springs 6. Thus, a holding force with which the backdoor 200 is held is more stabilized than a conventional technique. According to the present embodiment, the length of the resistance generation apparatus 1 in the direction of the rotational axis X can be set to be short. As a result, a mountability of the resistance generation apparatus 1 on the derive apparatus is enhanced, that is, a flexibility in mounting the resistance generation apparatus 1 is enhanced.

A second embodiment disclosed here will be described with reference to the drawings. In the second embodiment, the similar or same configurations to the first embodiment are designated by the same reference numerals and explanation thereof will be omitted. The drive apparatus of the second embodiment includes the similar configuration to the first embodiment, and therefore the explanation thereof will be omitted. A difference between the first embodiment and the second embodiment is a configuration of the resistance generation apparatus, and therefore a resistance generation apparatus 11 according to the second embodiment will be described below.

The resistance generation apparatus 11 of the second embodiment will be explained, focusing on an aspect that is different from the resistance generation apparatus 1 of the first embodiment. The explanation on the configurations of the resistance generation apparatus 11 which are similar or same to the resistance generation apparatus 1 will be omitted. In the first embodiment, the compression coil springs 6 are used as the holding portions which hold the levers 2 at the contact position P1 at which the contacting portions 26 of the respective levers 2 (i.e., the pivot members) are in contact with the inner surface 9a of the outer cylinder 9 (i.e., the fixing member). However, the holding portion is not limited to the compression coil spring. For example, an extension coil spring, a plate spring or other types of springs may be used as the holding portion. Alternatively, rubber, elastomer, or other types of elastic members or flexible members may be used as the holding portion. In the second embodiment, an extension coil spring 16 (i.e., the biasing member and the holding portion) is used instead of the compression coil spring 6.

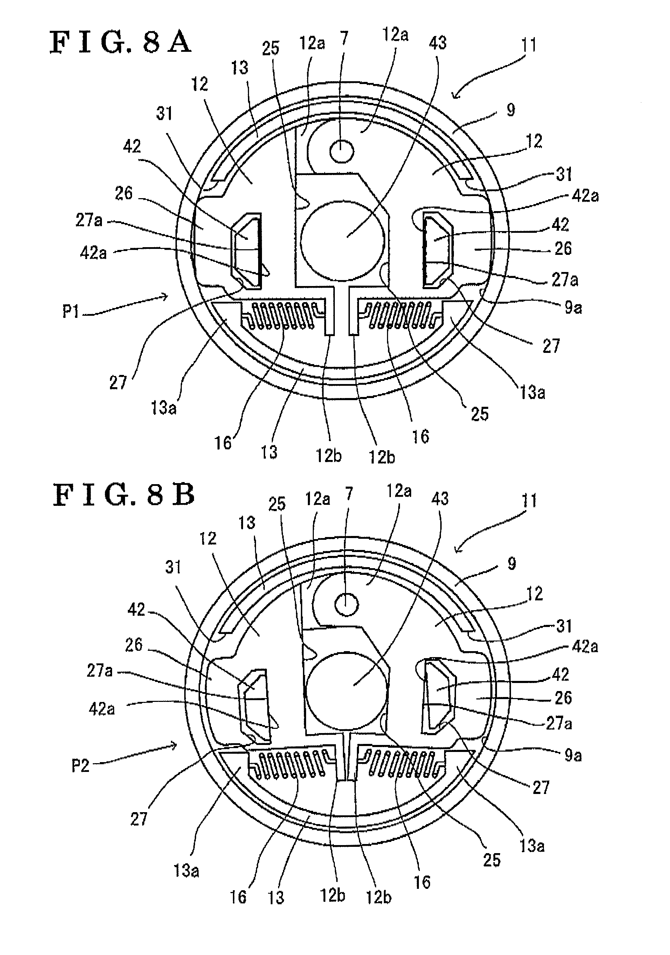

As illustrated in Figs. 8A and 8B, each of levers 12 (i.e., the pivot members) includes a base portion 12a and an end portion 12b. One end portion of the extension coil spring 16 is fixed to the end portion 12b of the lever 12 and the other end portion of the extension coil spring 16 is fixed to a fixing portion 13a of a case 13. As illustrated in Fig. 8A, the extension coil springs 16, which are fixed to the end portions 12b of the pair of levers 12, bias the end portions 12b of the levers 12 in a manner that the end portions 12b are opened, that is, in a manner that the end portions 12b are away from each other. Accordingly, the levers 12 are biased in a direction in which the levers 12 are away from the rotational axis X, and thus the contact portions 26 of the respective levers 12 are brought in contact with the inner surface 9a of the outer cylinder 9.

In the second embodiment, to prevent the extension coil springs 16 from being damaged by an excessive movement of the levers 12 towards the rotational center, the resistance generation apparatus 11 may be configured in such a manner that the end portions 12b of the levers 12 are brought in contact with each other to restrict the levers 12 from moving towards the rotational center by a predetermined amount or more. In this case, the end portions 12b of the respective levers 12 functions as the restriction portions.

An operation of the resistance generation apparatus 11 is similar to the operation of the resistance generation apparatus 1 of the first embodiment, and therefore the explanation on the operation of the resistance generation apparatus 11 will be omitted. The resistance generation apparatus 11 of the second embodiment provides the effects and advantages that are similar to the effects and advantages of the resistance generation apparatus 1 of the first embodiment. In the aforementioned embodiments, the explanations are made on the threaded spindle 113 serving as the rotational body, however, the rotational body may be a connecting device or a gear, for example.

In the aforementioned embodiments, the case 3 and the case 13 are used, however, the case 3 or the case 13 does not need to be used as long as the resistance generation apparatus includes a support body supporting the pivot shaft 7 together with the rotational body (i.e., the threaded spindle 113) in a rotatable manner. In addition, the power receiving portion (i.e., the coupling 4), receives the power of the motor in the aforementioned embodiments, however, the present disclosure is not limited thereto. The power receiving portion (i.e., the coupling 4) may be configured to receive human power (the power) of the user.

In the aforementioned embodiments, the resistance generation apparatus is used at the drive apparatus which opens/closes the backdoor. However, the resistance generation mechanism disclosed here may be adapted to be used at a power transmission portion of a motor drive apparatus such as a power slide door drive apparatus and/or a swing door drive apparatus, and at a power transmission portion of a hand operating apparatus such as a manual seat lifter and/or a manual window regulator. The resistance generation apparatus may generate the resistance so that the opened door, the closed window or the lifted seat is not lowered or not moved downwardly by an action of gravity.

A resistance generation apparatus (1, 11) includes a power receiving portion (4), a transmission portion (2, 3, 5, 7,12, 42) transmitting rotational motion of the power receiving portion to a rotational body (113), a fixing member (9, 107), the transmission portion including a pivot member (2, 12) being pivotable between a contact position (P1) at which the pivot member is in contact with the fixing member and a non-contact position (P2) at which the pivot member is separated from the fixing member, the transmission portion including a holding portion, the holding portion holding the pivot member at the contact position to generate resistance relative to rotational motion of the rotational body, the holding portion holding the pivot member at the non-contact position to release the resistance in a case where the power receiving portion is rotated by the power.

## Claims

1. A resistance generation apparatus (1, 11) comprising:
a power receiving portion (4) being rotatable and receiving power;
a transmission portion (2, 3, 5, 7, 12, 42) being rotatable and transmitting rotational motion of the power receiving portion (4) rotated by the power to a rotational body (113);
a fixing member (9, 107) arranged around the transmission portion (2, 3, 5, 7, 12, 42);
the transmission portion (2, 12) including a pivot member (2, 12) being pivotable between a contact position (P1) at which the pivot member (2, 12) is in contact with the fixing member (9, 107) and a non-contact position (P2) at which the pivot member (2, 12) is separated from the fixing member (9, 107);
the transmission portion (2, 12, 42) including a holding portion (6, 16, 42), the holding portion (6, 16) holding the pivot member (2, 12) at the contact position (P1) to generate resistance relative to rotational motion of the rotational body (113), the holding portion (42) holding the pivot member (2, 12) at the non-contact position (P2) to release the resistance in a case where the power receiving portion (4) is rotated by the power; and
the resistance generation apparatus (1,11) being used for a vehicle (150).

2. The resistance generation apparatus (1, 11) according to claim 1, wherein the holding portion (6, 16) includes a biasing member (6, 16) biasing the pivot member (2, 12) in a direction in which the pivot member (2, 12) is away from a rotational center of the transmission portion (2, 3, 5, 7, 12, 42) to hold the pivot member (2, 12) at the contact position (P1).

3. The resistance generation apparatus (1, 11) according to claim 2, wherein
the pivot member (2, 12) includes a pair of members (2, 12), and
the biasing member (6) is provided between the pair of members (2).

4. The resistance generation apparatus (1, 11) according to either claim 2 or 3, wherein the holding portion (42) includes a moving member (42) moving the pivot member (2, 12) towards the rotational center of the transmission portion (2, 3, 5, 7, 12, 42) to hold the pivot member (2, 12) at the non-contact position (P2) in a case where the power receiving portion (4) is rotated by the power.

5. The resistance generation apparatus (1, 11) according to claim 4, wherein
the moving member (42) corresponds to a protruding portion (42) protruding from the power receiving portion (4) along a rotational axis (X) of the power receiving portion (4), and
the pivot member (2, 12) is provided with a hole (27) and the protruding portion (42) is arranged in the hole (27) by insertion,

6. The resistance generation apparatus (1, 11) according to either claim 4 or 5, further comprising:
a restriction portion (43) restricting the pivot member (2, 12) from moving towards the rotational center, the restriction portion (43) being provided at the power receiving portion (4).

7. The resistance generation apparatus (1, 11) according to claim 1, further comprising:
a decelerator (112) arranged between the transmission portion (2, 3, 5, 7, 12, 42) and the rotational body (113), and decelerating a rotational speed of rotations of the transmission portion (2, 3, 5, 7, 12, 42).
